# EUROPÄISCHE PATENTSCHRIFT

(11) **EP 1 095 819 B1**
(45) Veröffentlichungstag und Bekanntmachung des Hinweises auf die Patenterteilung: **07.01.2004**
(21) Anmeldenummer: 00121235.6
(22) Anmeldetag: 02.10.2000
(51) Int. Cl.: B60R 7/04, B60R 7/00, B60R 11/06

(54) **Vorrichtung zur Aufnahme eines Gegenstands in einem Kraftfahrzeug**
Holding device for an object in a motor vehicle
Dispositif pour maintenir un objet dans un véhicule à moteur

(30) Priorität: 29.10.1999 DE 19952156
(43) Veröffentlichungstag der Anmeldung: 02.05.2001
(73) Patentinhaber: Volkswagen Aktiengesellschaft, 38436 Wolfsburg (DE)
(72) Erfinder: Neumann, Otto, 32587 Meine (DE); Krause, Reinhard, 38440 Wolfsburg (DE)

(56) Entgegenhaltungen:
- EP-A- 0 428 467
- EP-A- 0 507 161
- EP-B- 0 586 842
- DE-A- 4 433 422
- FR-A- 1 004 114
- US-A- 3 543 311
- US-A- 4 564 167
- US-A- 5 535 931
- US-A- 5 800 004

## Beschreibung

Die Erfindung betrifft eine Vorrichtung zur Aufnahme eines Gegenstands, insbesondere eines Aktenkoffers oder einer Tasche in einem Kraftfahrzeug mit einer Auflage, auf weicher der Gegenstand angeordnet werden kann, und die an einem Wandabschnitt eines Innenraums des Kraftfahrzeugs angeordnet ist, und Fixiermitteln zum Fixieren des Gegenstands, wenn der Gegenstand auf der Auflage angeordnet ist.

Derartige Vorrichtungen werden benutzt, um verschiedene Gegenstände, wie Gepäckstücke, Werkzeugtaschen oder Verbandskästen in dem Kraftfahrzeug so anzuordnen, daß die Gegenstände für einen Transport in dem Kraftfahrzeug geeignet gesichert sind, um ein Verrutschen der Gegenstände bei einer Bewegung des Kraftfahrzeugs zu verhindem.

Aus der EP 0 507 161 ist eine Vorrichtung bekannt, bei der die Gegenstände mit Hilfe eines Bandes aus einem elastischen, rutschfesten Material geklemmt sind. Eine auf ähnliche Weise wirkende Spannvorrichtung ist in der DE 42 13 821 offenbart.

Gemäß der Druckschrift J-7266989 wird ein Netz zur Fixierung des Gegenstands genutzt, wobei das Netz auf einer Unterseite einer Kofferraumklappe befestigt ist.

Nach dem US-Patent 5,702,144 können Gegenstände, insbesondere Werkzeuge in einem Hohlraum angeordnet sein, der in der Karosserie einer Hecktür ausgebildet ist, wobei der Hohlraum verschließbar ist. Eine Klappe zum Verschließen des Hohlraums kann gemäß des US-Patents 4,750,774 schwenkbar an der Hecktür angeordnet sein.

Aus der DE 197 14 497 ist ein Aufnahmeelement bekannt, das auf einer Innenseite eines Gepäckraumdeckels eines Kraftfahrzeugs angeordnet ist, wobei das Aufnahmeelement drei Stauräume umfaßt, die jeweils mittels eines Klappdeckels verschließbar sind.

Gemäß des US-Patents 5,702,983 kann ein Gegenstand, insbesondere ein Koffer auf einer Auflage angeordnet sein, die in einer Tür des Kraftfahrzeugs ausgebildet ist. Um den Gegenstand auf der Auflage anzuordnen, wird eine an der Tür befestigte Armlehne von der Tür weg geschwenkt. Nachdem der Gegenstand auf der Auflage angeordnet ist, kann die Armlehne in ihre Ausgangsstellung zurück geschwenkt werden, so daß der Gegenstand an einer Innenseite der Tür fixiert ist.

Das US-Patent 3,543,311 beschreibt eine faltbare und klappbare Ablage für ein Fahrzeug. Die Ablage kann zum Beispiel auf der Innenseite einer Fahrzeugtür angebracht werden. Die abklappbare Seitenwand eignet sich speziell als Ablage für Vorderpfoten von größeren Haustieren.

In dem US-Patent 5,535,931 wird eln Ablagesystem für den Innenraum einen Fahrzeugs offenbart, die sich einem Randkasten im Heckbereich optimal anpaßt. Das Ablagesystem wird entweder an der Seitenwand oder am Fußboden des Kofferaums/Gepäckabteils befestigt.

Aufgabe der vorliegenden Erfindung Ist es, eine robuste Vorrichtung zur Aufnahme eines Gegenstands in einem Kraftfahrzeug zu schaffen, die in verschiedenen Bereichen des Innenraums des Kraftfahrzeugs nutzbar, deren Platzbedarf im Innenraum des Kraftfahrzeugs gering und die an Gegenstände unterschiedlicher Abmessungen anpaßbar ist.

Diese Aufgabe wird bei einer Vorrichtung nach dem Oberbegriff des Anspruchs 1 erfindungsgemäß durch die kennzeichnenden Merkmale des Anspruchs 1 gelöst.

Vorteilhafterweise weisen in der Erfindung die Fixiermittel wenigstens ein Sicherungsmittel auf, das in einem Abstand oberhalb der Auflage angeordnet ist und In eine Fixierstellung schwenkbar ist, um den Gegenstand auf der Auflage zu fixieren. Es handelt sich also um starre und daher robuste Teile.

Durch das Übergreifen kann der Gegenstand in Kontakt mit oder in einem festen Abstand zu dem Wandabschnitt gehalten werden.

Durch die vorgesehene Einstellbarkeit kann die Vorrichtung zur Aufnahme des Gegenstands an Gegenstände mit verschiedenen Formen und Größen angepaßt werden kann.

Eine Fortbildung der Erfindung sieht vor, daß die Sicherungsmittel einen hinteren Abschnitt, der an dem Wandabschnitt angeordnet ist, und einen vorderen Abschnitt umfassen, der hinsichtlich des hinteren Abschnitts in Richtung der Auflage abgewinkelt ist, wodurch die Fixierung des Gegenstands mittels der Sicherungsmittel erleichtert ist.

Bei einer vorteilhaften Ausgestaltung der Erfindung kann vorgesehen sein, daß die Längenverstellung mehrteilig ausgebildet ist, so daß ein Abstand des vorderen Abschnitts von dem Wandabschnitt zumindest in der Fixierstellung veränderbar ist. Hierdurch ist eine weitere Möglichkeit zur Anpassung des Sicherungsmittels an Gegenstände mit verschiedenen Größen und Formen geschaffen.

Die Erfindung wird im folgenden anhand eines Ausführungsbeispiels unter Bezugnahme auf eine Zeichnung näher erläutert. Hierbei zeigen;
- Figur 1: einen Lieferwagen mit geöffneten Hecktüren von hinten;
- Figur 2: einen Ausschnitt der Hecktüren von innen; und
- Figur 3: eine Vorrichtung zur Aufnahme eines Gegenstands, die an einem Wandabschnitt angeordnet ist;
- Figur 4: ein weiteres Ausführungsbeispiel der erflndungsgemäßen Vorrichtung, an einem Deckenwandabschnitt angeordnet.

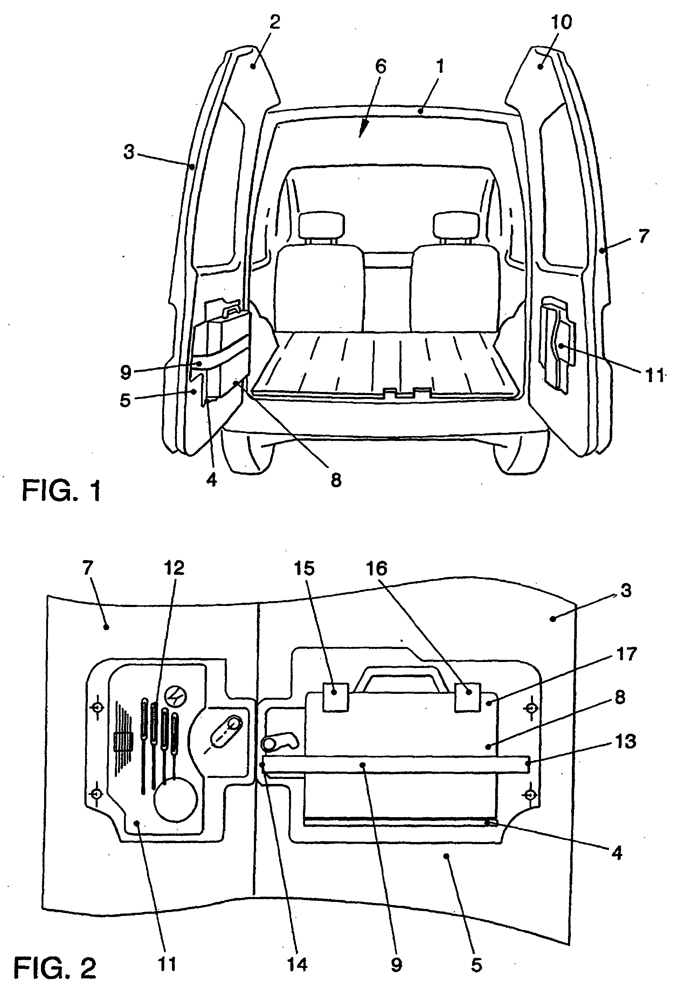

Gemäß Figur 1 weist ein Kraftfahrzeug 1 auf einer Innenseite 2 einer Hecktür 3 eine Auflage 4 auf. Die Auflage 4 ist an einem Wandabschnitt 5 der Wände angeordnet, die einen Innenraum 6 des Kraftfahrzeugs 1 wenigstens teilweise umgeben. Gemäß Figur 1 ist der Wandabschnitt 5 an der Hecktür 3 ausgebildet, die insbesondere in einem geschlossenen Zustand Teil der den Innenraum 6 des Kraftfahrzeugs 1 bildenden Wände ist. Auf der Auflage 4 ist ein Koffer 8, beispielsweise ein Werkzeug- oder ein Aktenkoffer angeordnet. Es kann sich hierbei auch um eine Tasche oder ein anderes tragbares Behältnis handeln. Der Koffer 8 wird mit Hilfe eines flexiblen Bands 9, beispielsweise eines elastischen Gummibands leicht gegen den Wandabschnitt 5 gedrückt, und ist hierdurch auf der Auflage 4 fixiert.

Die weitere Hecktür 7 weist auf einer Innenseite 10 eine zusätzliche Aufnahme 11 auf, die vorzugsweise als ein in die weitere Hecktür 7 integrierter Hohlraum ausgebildet ist.

Figur 2 zeigt die Innenseite 2 der Hecktür 3 und die Innenseite 10 der weiteren Hecktür 7 im Ausschnitt. Es sind die Anordnung des Koffers 8 auf der Auflage 4 und die zusätzliche Aufnahme 11 dargestellt, wobei die Hecktür 3 und die weitere Hecktür 4 in einem geschlossenen Zustand gezeigt sind. In der weiteren Aufnahme 11 können beispielsweise Werkzeuge 12 untergebracht sein (vgl. Figur 2).

Das flexible Band 9 ist an zwei Enden 13, 14 jeweils an dem Wandabschnitt 5 befestigt. Hierbei kann vorgesehen sein, daß wenigstens eines der Enden 13 oder 14 lösbar an dem Wandabschnitt 5 angeordnet ist, so daß das wenigstens eine der Enden 13 oder 14 von dem Wandabschnitt 5 gelöst werden kann, um die Fixierung des Koffers 8 auf der Auflage 4 zu lösen. Das flexible Band 9 erstreckt sich oberhalb der Auflage 4, in Längsrichtung der Auflage 4 über den Koffer 8.

Zur weiteren Fixierung und Befestigung des Koffer 8 an dem Wandabschnitt 5 sind gemäß Figur 2 Sicherungsmittel 15, 16 vorgesehen, die vorzugsweise gleichartig ausgebildet sind. Die Sicherungsmittel 15, 16 greifen in einem oberen Bereich 17 des Koffers 8 über den Koffer 8, so daß der Koffer 8 mittels der Sicherungsmittel 15, 16 fixiert ist, auch wenn das flexible Band 9 nicht Ober den Koffer 8 gespannt ist.

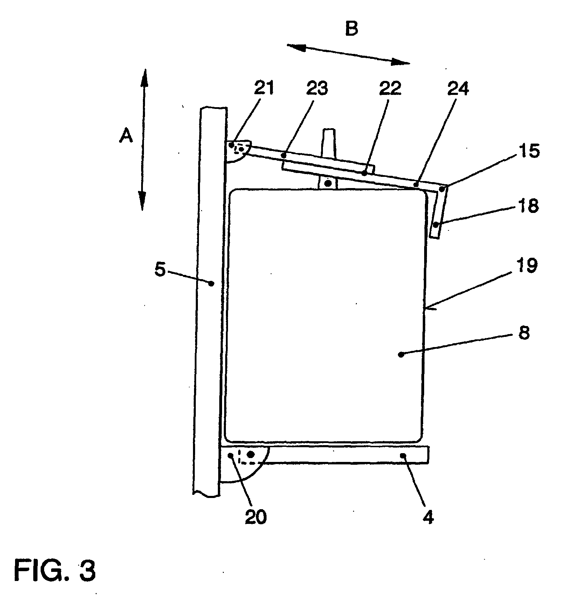

Figur 3 zeigt die Auflage 4 und den an dem Wandabschnitt 5 angeordneten Koffer 8 in Seitenansicht. Ein vorderer Abschnitt 18 des Sicherungsmittels 15 ist auf einer Vorderseite 19 des Koffers 8 angeordnet, wenn der Koffer 8 auf der Auflage 4 angeordnet ist und die Sicherungsmittel 15, 16 in einer Fixierstellung angeordnet sind.

Die Auflage 4 ist mittels eines Scharniers 20 an dem Wandabschnitt 5 montiert. Mit Hilfe des Scharniers 20 ist es möglich, die Auflage 4 zwischen einer Stellung, in der die Auflage 4 im wesentlichen parallel zum Wandabschnitt 5 angeordnet ist (nicht dargestellt), und einer anderen, in Figur 3 gezeigten Stellung zu schwenken, in weicher die Auflage 4 in einem Winkel von etwa 90° zu dem Wandabschnitt 5 angeordnet ist. Ist der Koffer 8 nicht auf der Auflage 4 angeordnet, so wird die Auflage 4 in die eine Stellung geschwenkt, so daß mehr Platz im Kofferraum des Kraftfahrzeugs 1 zur Verfügung steht. Die Auflage 4 ist vorzugsweise in der einen und in der anderen Stellung jeweils arretierbar, so daß die Auflage 4 in der einen oder der anderen Stellung verbleibt, wenn sie von einem Benutzer in die jeweilige Stellung gebracht wurde.

Gemäß Figur 3 ist das Sicherungsmittel 15 mit Hilfe eines weiteren Scharniers 21 an dem Wandabschnitt 5 montiert, so daß auch das Sicherungsmittel 15 und in gleicher Weise das Sicherungsmittel 16 schwenkbar sind. Ist kein Koffer 8 auf der Auflage 4 angeordnet, so sind die Sicherungsmittel 15, 16 vorzugsweise nach unten, in Richtung des Wandabschnitts 5 geschwenkt, so daß in dem Kraftfahrzeug 1 der Innenraum vergrößert wird, der für den Transport von Gepäck oder anderen Gegenständen zur Verfügung steht.

Um eine Anpassung der Sicherungsmittel 15, 16 an verschiedene Gegenstände zu ermöglichen (vgl. Figur 3), ist einerseits das weitere Scharnier 21 entlang einer Pfeilrichtung A verstellbar, vorzugsweise verschiebbar an dem Wandabschnitt 5 angeordnet. Andererseits kann die Länge eines hinteren Abschnitts 22 eingestellt werden. Hierzu sind beispielsweise Teile 23, 24 des hinteren Abschnitts entlang einer Pfeilrichtung B gegeneinander verschiebbar.

Zweckmäßig kann vorgesehen sein, daß die Auflage 4 und die Sicherungsmittel 15, 16 jeweils im wesentlichen formschlüssig in Ausnehmungen in der Hecktür 3 so eingeklappt werden (nicht dargestellt), daß die Auflage 4 und die Sicherungsmittel 15, 16 jeweils im wesentlichen flach auf dem Wandabschnitt 5 angeordnet sind, wenn die Auflage 4 nicht zur Aufnahme des Aktenkoffers 8 genutzt wird.
Wegen der Schwenkbarkeit sind die Auflage 4 und die Sicherungsmittel 15, 16 jeweils einhändig betätigbar.

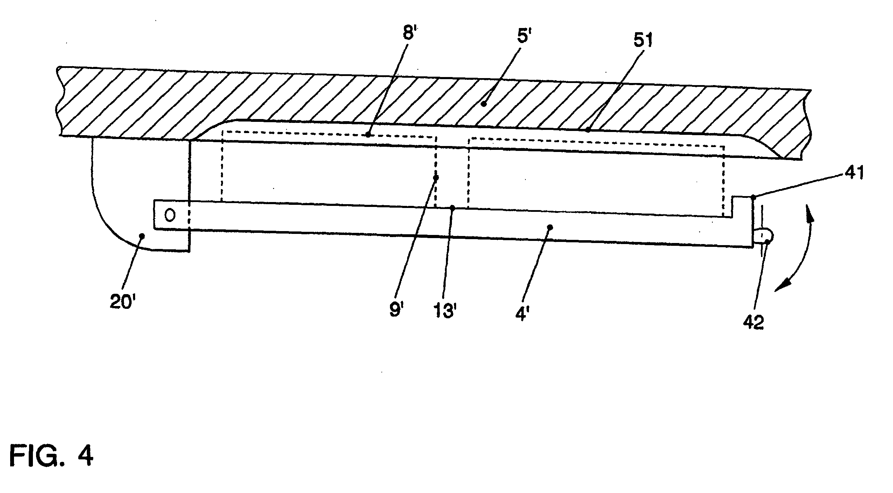

Figur 4 zeigt ein weiteres Ausführungsbeispiel der erfindungsgemäßen Vorrichtung. Hierbei ist die Vorrichtung an dem Wandabschnitt 5' einer Deckenwand im Fahrzeug angeordnet. Es ist eine Auflage 4' dargestellt, die mittels eines Scharniers 20' am Wandabschnitt 5' montiert ist und sich in einer horizontalen Lage befindet. Die Auflage 4' stützt einen gestrichelt angedeuteten Koffer 8' ab, der zusätzlich mit einem flexiblen Band 9' auf der Auflage 4' gesichert ist. Das flexible Band 9' ist jeweils an zwei Enden 13',14' (vorzugsweise lösbar) an der Auflage 4' befestigt, wobei in Figur 4 nur das Ende 13' sichtbar ist. Zusätzlich kann der Wandabschnitt 5', ggf. eine Innenverkleidung, mit einer Einbuchtung oder Ausnehmung 51 versehen sein, so daß ein größerer Aufnahmeraum erzielt wird. Die Auflage 4' ist in nicht näher dargestellter Weise durch geeignete Mittel in ihrer horizontalen bzw. vertikalen Lage arretierbar. Zur Entnahme bzw. Ablage des Koffers 8' kann die Auflage 4' an einem Griff 42 erfaßt und in die entsprechend gewünschte Lage geschwenkt werden (s. Pfeil). Damit der Koffer 8' in der vertikalen Lage nicht sofort nach unten rutscht, ist die Wandung der Auflage 4' mit einem Vorsprung 41 versehen. Zur Unterstützung einer Schwenkung der Auflage 4' in die horizontale Lage, insbesondere mit aufgelegtem Koffer 8', können (nicht dargestellte) geeignete Hilfsmittel, wie z. B. Federelemente vorgesehen sein.

### BEZUGSZEICHENLISTE

- 1: Kraftfahrzeug
- 2: Innenseite der Hecktür 3
- 3: Hecktür
- 4: Auflage
- 5: Wandabschnitt
- 6: Innenraum
- 7: weitere Hecktür
- 8: Koffer
- 9: flexibles Band
- 10: Innenseite der weiteren Hecktür 7
- 11: zusätzliche Aufnahme
- 12: Werkzeuge
- 13, 14: Enden des flexiblen Bands 9
- 15, 16: Sicherungsmittel
- 17: oberer Bereich des Koffers 8
- 18: vorderer Abschnitt des Sicherungsmittels 15
- 19: Vorderseite des Koffers 8
- 20: Scharnier
- 21: weiteres Scharnier
- 22: hinterer Abschnitt des Sicherungsmittels 15
- 23, 24: Teile des hinteren Abschnitts 22
- 41: Vorsprung
- 42: Griff
- 52: Einbuchtung

## Patentansprüche

1. Vorrichtung zur Aufnahme eines Gegenstands (8, 8'), insbesondere eines Aktenkoffers oder einer Tasche in einem Kraftfahrzeug (1), mit einer Auflage (4, 4'), auf welcher der Gegenstand (8, 8') angeordnet werden kann, und die an einem Wandabschnitt (5, 5') eines Innenraums (6) des Kraftfahrzeugs (1) schwenkbar angeordnet ist, und Fixiermitteln (9, 9', 15, 16) zum Fixieren des Gegenstands (8, 8'), wenn der Gegenstand (8, 8') auf der Auflage (4, 4') angeordnet ist, **dadurch gekennzeichnet, daß** schwenkbare Sicherungsmittel (15, 16), die den Gegenstand (8) in einem oberen Bereich (17) übergreifen, oberhalb der Auflage (4) in einem einstellbaren Abstand von dieser und/oder mit einstellbarer Länge angeordnet sind.

2. Vorrichtung nach Anspruch 1, **dadurch gekennzeichnet, daß** die Sicherungsmittel (15, 16) einen hinteren Abschnitt (22), der an dem Wandabschnitt (5) angeordnet ist, und einen vorderen Abschnitt (18) umfassen, der hinsichtlich des hinteren Abschnitts (22) in Richtung der Auflage (4) abgewinkelt ist, so daß in der Fixierstellung die Sicherungsmittel (15, 16) den Gegenstand (8) in dem oberen Bereich übergreifen.

3. Vorrichtung nach Anspruch 1 oder 2, **dadurch gekennzeichnet, daß** der hintere Abschnitt (22) zur Längenverstellung (B) mehrteilig ausgebildet ist, so daß ein Abstand des vorderen Abschnitts (21) von dem Wandabschnitt (5) zumindest in der Fixierstellung veränderbar ist.

4. Vorrichtung nach Anspruch 1, **dadurch gekennzeichnet, daß** zur Einstellung des Abstands eine Höheneinstellung (A) des hinteren Abschnitts (22) vorgesehen ist.

## Claims

1. Device for holding an object (8, 8'), in particular a briefcase or a bag in a motor vehicle (1), having a support (4, 4'), on which the object (8, 8') can be arranged and which is pivotably arranged on a wall section (5, 5') of an interior (6) of the motor vehicle (1), and having fixing means (9, 9', 15, 16) for fixing the object (8, 8') when the object is arranged on the support (4, 4'), **characterized in that** pivotable securing means (15, 16), which engage over the object (8) in an upper region (17), are arranged above the support (4) at an adjustable distance from the latter and/or with an adjustable length.

2. Device according to Claim 1, **characterized in that** the securing means (15, 16) comprise a rear section (22), which is arranged on the wall section (5), and a front section (18), which is angled away, with respect to the rear section (22), in the direction of the support (4), so that, in the fixing position, the securing means (15, 16) engage over the object (8) in the upper region.

3. Device according to Claim 1 or 2, **characterized in that** the rear section (22) is of multiple-part configuration for length adjustment (B), so that a distance between the front section (21) and the wall section (5) can be changed at least in the fixing position.

4. Device according to Claim 1, **characterized in that** a height adjustment means (A) for the rear section (22) is provided for adjusting the distance.

## Revendications

1. Dispositif pour la réception d'un objet (8, 8'), en particulier d'un attaché-case ou d'un sac dans une automobile (1), avec un appui (4, 4') sur lequel l'objet (8, 8') peut être disposé et qui est disposé en pivotement sur une section de paroi (5, 5') d'un habitacle (6) d'une automobile (1) et des moyens de fixation (9, 9', 15, 16) pour fixer l'objet (8, 8') lorsque l'objet (8, 8') est disposé sur l'appui (4, 4'), **caractérisé en ce que** des moyens de retenue (15, 16) pivotants s'étendant par-dessus l'objet (8) dans une partie supérieure (17), sont disposés au-dessus de l'appui (4) avec un écart réglable de celui-ci et/ou avec une longueur réglable.

2. Dispositif selon la revendication 1, **caractérisé en ce que** les moyens de retenue (15, 16) comprennent une section arrière (22), disposée sur la section de paroi (5) et une section avant (18), qui, par rapport à la section arrière (22) est coudée en direction de l'appui (4) de sorte que dans la position de fixation, les moyens de retenue (15, 16) s'étendent par-dessus l'objet (8) dans la partie supérieure.

3. Dispositif selon une des revendications 1 ou 2, **caractérisé en ce que**, pour le réglage longitudinal (B), la section arrière (22) est formée de plusieurs pièces de sorte qu'un écart de la section avant (21) depuis la section de paroi (5) est modifiable au moins dans la position de fixation.

4. Dispositif selon la revendication 1, **caractérisé en ce que** pour le réglage de l'écart, un réglage en hauteur (A) de la section arrière (22) est prévu.
